# EUROPEAN PATENT APPLICATION

(11) **EP 1 379 096 A1**
(43) Date of publication of application: **07.01.2004**
(21) Application number: 02077643.1
(22) Date of filing: 03.07.2002
(51) Int. Cl.: H04Q 7/38

(54) **Optimized routing of a call to a roaming mobile subscriber**

(71) Applicant: Koninklijke KPN N.V., 9726 AE Groningen (NL)
(72) Inventor: van Loon, Johannes Maria, 2719 JE Zoetermeer (NL); Markoski, Ivan, 2593 BK The Hague (NL); Busropan, Bryan Jerrel, 2268 BP Leidschendam (NL); Cordenier, Tomas Hector André Jozef, 2613 VS Delft (NL)
(74) Representative: Prins, Adrianus Willem

(57) **Abstract**

Telecommunication system comprising a first network (HPLMN). A terminal (RT), roaming at the first network, will register to the first network using terminal data being exchanged between a network node (VMSC) and a home location register (HLRA) within a second (the roaming terminals' home) network (VPLMN). The first network preferably comprises a terminal data monitor (ORDB) which is fit for monitoring and storing the terminal data exchanged between the network node and the terminal data database. The terminal data monitor within the roaming network is to be used -instead of the HLR within terminal A's home network- as a source for terminal data, to be used as routing information for initiating calls from other terminals (CT). By doing so traffic between roaming terminals doesn't need to be routed via the roaming terminals' home network (the second network), thus saving international traffic links.

## Description

### Field of the invention

The invention refers to a telecommunication system, comprising a first traffic network to which visiting "roaming" terminals may be connected by registering themselves to one of first traffic network's MSCs (Mobile Switching Centers).

### Background of the invention

The invention refers to a telecommunication system, comprising a first traffic network to which visiting "roaming" terminals may be connected by registering themselves to one of first traffic network's MSCs (Mobile Switching Centers). The roaming terminal's data (the "User Profile", containing terminal capabilities, settings, supported protocols, billing items etc., specific for the roaming terminal and/or its user) are retrieved from a terminal data register, the HLR (Home Location Register) within a second traffic network, the roaming terminal's home network.

When a second terminal (this may be a domestic terminal or another roaming terminal), initiates -via a second MSC- a call to the first, roaming terminal, it is necessary to have the terminal data of the called roaming terminal. To that end the terminal data of the roaming terminal are retrieved at the roaming terminal's HLR, located within the roaming terminal's home network, outside the first network.

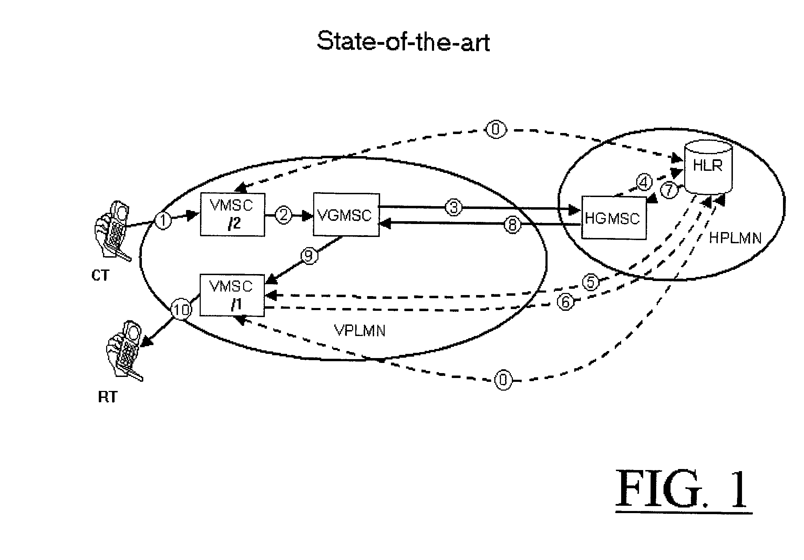

In accordance with the current network protocols, a traffic link between the calling terminal and the called roaming terminal will be routed via a GMSC (Gateway Mobile Switching Center) in the first network to a GMSC within the second network (having access to the roaming terminal's HLR) and vice versa, thus taking up two inter-network traffic links between both traffic networks. This state-of-the-art situation is depicted in figure 1.

### Summary

Taking up two international (inter-network) traffic links for one traffic connection between a calling terminal and a roaming terminal both being registered within one and the same (first) network of course is disadvantageous. For that reason the first network may advantageously be provided with a terminal data monitor that is fit for monitoring the terminal data exchanged, during the registration process of the roaming terminal, between a first node (MSC) of the first network and the terminal data register (HLR) within the second network. When a second terminal initiates a call to the first, roaming terminal, the relevant terminal data (User Profile data), are exchanged between the second node (MSC) and the terminal data monitor.

The terminal data monitor, residing within the first network, monitors, via e.g. an SS7 network, the exchanged terminal data -including "roaming" terminals- during their registering process to the network. The monitored registration data may be stored and accessed when a (second) terminal initiates a call to a roaming (first) terminal. Instead of looking for the relevant data of the roaming terminal, the calling terminal, via its MSC, may retrieve now those data from a data source within the same network instead of -according to the state-of-the-art- from a data source outside that network.
Note: SS7 stands for "Signaling System 7", comprising a separate signaling network and protocol adopted by the ITU, used in public switched telephone systems for setting up calls and providing services.

The present invention also comprises a terminal data monitor, fit for monitoring terminal data exchanged between nodes of a network and terminal data registers outside that network, especially the HLRs of roaming terminals, and for exchanging the relevant terminal data with network nodes used by terminals which initiate a call to such roaming terminal.

The present invention also comprises a method for, in a telecommunication system comprising a first network, a first terminal registering to the first network via a first node of the first network, exchanging terminal data between the first node and a terminal data register within a second network, a terminal data monitor within the first network monitoring the terminal data exchanged between the first node of the first network and the terminal data register within the second network, a second terminal initiating a call to the first terminal via a second node of the first network, exchanging terminal data between the second node and the terminal data monitor within the first network.

It is noted that, in the system and method according to the invention, a calling terminal does not need to enter any prefix or other additional or alternative number information when calling a roaming terminal due to the fact that the terminal data monitor "knows", from its monitoring the signaling network, whether the called terminal is a roaming terminal or a domestic terminal.

### Brief Description of the Drawings

Figure 1 gives an illustration of the state-of-the-art.
Figure 2 depicts schematically the telecommunication system comprising a terminal data monitor.

### Detailed Description of the Drawings

The following acronyms are used in both figures:
- CT =: Calling Terminal
- HGMSC =: Home Gateway Mobile Switching Centre
- HLR =: Home Location Register
- HPLMN =: Home Public Land Mobile Network ("second network")
- lAM =: Initial Address Message
- ISUP =: ISDN User Part
- MAP/D =: Mobile Application Part / D protocol
- ORDB =: Optimal Routing DataBase ("terminal data monitor")
- RT =: Roaming Terminal
- SRI(B =: Send Routing Information (B subscriber)
- VGMSC =: Visited Gateway Mobile Switching Centre
- VLR =: Visitor Location Register ("terminal data register")
- VMSC =: Visited Mobile Switching Centre ("node")
- VPLMN =: Visited Public Land Mobile Network ("first network")

Both figures show a telecommunication system, comprising a first network VPLMN and a second network HPLMN.

A first terminal RT may register to the first network via a first node VMSC of the first network. During the registration session terminal data ("signaling data") is exchanged, via a signaling network (e.g. ITU SS7 (C7) network), between the first node and a terminal data register HLR within the second network, roaming terminal's home network.

A second terminal CT may initiate a call to the first terminal RT via a second node VMSC of the first network VPLMN, using the terminal data being exchanged and stored in the terminal data register HLR within the second network HPLMN.

Figure 1 depicts the information flow in this state-of-the-art system:
0. When terminal RT registers (attaches, detaches or a performance of location update procedures), signaling information (terminal data) is exchanged via MAP/D messages between the VLR, which mostly resides in the VMSC in the VPLMN, and the HLR in the HPLMN. So the terminal data of roaming terminal RT is stored in RT's HLR, residing within RT's HPLMN.
1. The calling terminal CT ("the second terminal") initiates a call to the roaming terminal RT ("the first terminal") by sending a Setup message to the VMSC to which it is attached (VMSC).
2. VMSC forwards an ISUP lAM message to the VGMSC to setup a connection to the VGMSC.
3. VGMSC forwards an ISUP lAM message to the HGMSC of the roaming terminal RT (HGMSC) to setup a connection to the HGMSC.
4. HGMSC initiates a MAP/C SRI(B) message to the HLR of the roaming terminal RT (HLRB) to get routing information for the roaming terminal RT.
5. HLRB sends a MAP/D PRN message to the VMSC to which the roaming terminal RT is attached (VMSC) to get routing information, the so-called Mobile Station Roaming Number (MSRN),
6. VMSC passes the MSRN to the HLRB via a MAP/D PRN Result message.
7. HLRB sends the MSRN in a MAP/C SRI Result message to the HGMSC.
8. HGMSC proceeds with the call establishment using the MSRN, by sending an ISUP lAM message towards the VGMSC.
9. VGMSC in turn forwards an ISUP lAM message to the VMSC to setup a connection to the VMSC.
10. Finally, the call is offered by the VMSC to the roaming terminal RT via a Setup message and the connection is completed.

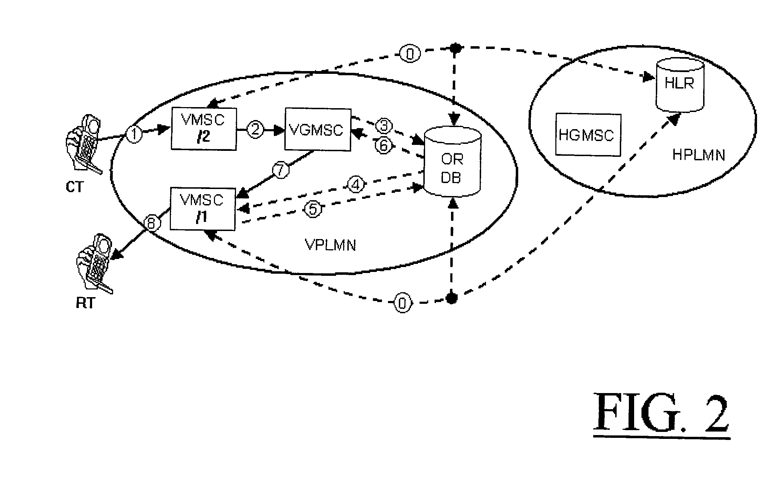

Figure 2 shows -like figure 1- a telecommunication system, comprising
a first network VPLMN and a second network HPLMN.
A first terminal RT may register to the first network via a first node VMSC of the first network. During the registration session terminal data ("signaling data") is exchanged, via a signaling network (e.g. C7 network), between the first node and a terminal data register HLR within the second network, terminal A's home network. The first network, moreover, comprises a terminal data monitor (ORDB) fit for monitoring, via the signaling network, the terminal data exchanged between the first node of the first network and the terminal data register within the second network.

In system depicted in figure 2 the VGMSC gets its routing information from an the terminal data monitor (OR Database) which is filled with the information needed for routing calls during the information exchange processes between VLR and HLR during registration of the terminals. Therefore no cooperation of the roaming terminal RT's HPLMN is needed to implement this way of routing.

The information flow in figure 2 is as follows:
0. When a terminal attaches, detaches or location update procedures are performed, information is exchanged via MAP/D messages between the VLR, which mostly resides in the VMSC in the VPLMN, and the HLR in the HPLMN. The information exchanged between these entities is monitored and processed by the ORDB and the relevant information needed for (future) optimal call routing is stored in the ORDB (e.g. subscriber information, address of VMSC, etc.).
1. The calling terminal CT initiates a call by sending a Setup message to the VMSC to which it is attached (VMSC).
2. VMSC forwards an ISUP lAM message to the VGMSC to setup a connection to the VGMSC.
3. VGMSC initiates a MAP/C SRI(B) message to the ORDB to get routing information for the roaming terminal RT.
4. ORDB sends a MAP/D PRN message to the VMSC to which the roaming terminal RT is attached (VMSC) to get routing information, the so-called Mobile Station Roaming Number (MSRN).
5. VMSC passes the MSRN to the ORDB via a MAP/D PRN Result message.
6. ORDB sends the MSRN in a MAP/C SRI Result message to the VGMSC.
7. VGMSC proceeds with the call establishment using the MSRN, by sending an ISUP IAM message towards the VMSC. The call is now routed in an optimal way. If the ORDB is not able to provide MSRN, the VGMSC routes the call in a non-optimal way to the GMSC in the HPLMN (flow not shown in the figure).
8. Finally, the call is offered to the roaming terminal RT via a Setup message and the connection is completed.

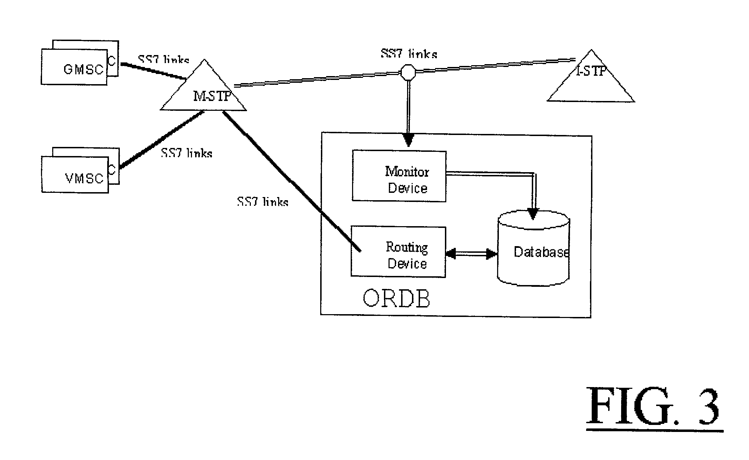

The Optimal Routing Database system ORDB may consist of the following components as depicted in Figure 3, comprising a Monitor Device, a Routing Device and Database.

The Monitor Device is connected to the international Signaling System no. 7 links (SS7 links), i.e. the SS7 links between the mobile STP (M-STP) and the international STP (I-STP), in order to monitor the MAP messages. These MAP messages are analyzed and the relevant information elements are sent to the OR Database for storage. As a Monitor Device the ACCESS7 system of AGILENT Technologies may be a good candidate.

The Routing Device is connected via one or more SS7 links to the M-STP for exchanging MAP messages with the relevant network nodes, i.e. VMSCs and GMSCs. On receipt of the MAP message 'MAP_Send_Routing_Information' from a GMSC, via the SS7 link from the M-STP, the Routing Device starts the SRl_HLR process. The MAP messages MAP_Provide_Roaming_Number, MAP_Provide_Roaming_Number_Ack and finally the MAP_Send_Routing_lnformation_Ack used within the SRI_HLR process are sent over the same SS7 link, via the M-STP, to the addressed network nodes VMSC or GMSC. During execution of the SRI_HLR process the Routing Device uses subscriber data stored in the Database.

The Database stores the subscriber records containing the information elements.

## Claims

1. A telecommunication system, comprising a first network (VPLMN), a first terminal (RT), fit for registering to said first network via a first node (VMSC/1) of said first network, terminal data being exchanged between said first node and a terminal data register (HLR) within a second network (HPLMN);
the first network comprising a terminal data monitor (ORDB) fit for monitoring the terminal data exchanged between said first node of the first network and said terminal data register within the second network;
a second terminal (CT) being fit for initiating a call to said first terminal (RT) via a second node (VMSC/2) of said first network, terminal data being exchanged between said second node and said terminal data monitor (ORDB) within said first network.

2. A terminal data monitor, fit to be used in a telecommunication system comprising a first network (HPLMN) and a first terminal, fit for registering to the first network via a first node (MSC1) of the first network, terminal data being exchanged between the first node and a terminal data register (HLR) within a second network (VPLMN), the terminal data monitor comprising means for monitoring the terminal data exchanged between the first node of the first network and the terminal data register within the second network, the terminal data monitor, moreover, comprising means for exchanging terminal data with a second node of the first network to be used by a second terminal, initiating a call to the first terminal via the second node.

3. A method for, in a telecommunication system comprising a first network (HPLMN),
a first terminal (RT) registering to said first network via a first node (MSC1) of said first network, exchanging terminal data between said first node and a terminal data register (HLR) within a second network (VPLMN),
a terminal data monitor (ORDB) within the first network monitoring the terminal data exchanged between said first node of the first network and said terminal data register within the second network,
a second terminal (CT) initiating a call to said first terminal (RT) via a second node (MSC2) of said first network, exchanging terminal data between said second node and said terminal data monitor (ORDB) within said first network.
